(19) Europäisches Patentamt
European Patent Office
Office européen des brevets

(11) **EP 4 580 247 A1**

(12) **EUROPEAN PATENT APPLICATION**
published in accordance with Art. 153(4) EPC

(43) Date of publication:
**02.07.2025 Bulletin 2025/27**

(21) Application number: **22958444.6**

(22) Date of filing: **15.09.2022**

(51) International Patent Classification (IPC):
**H04W 28/06** (2009.01)

(52) Cooperative Patent Classification (CPC):
**H04W 28/06**

(86) International application number:
**PCT/CN2022/119125**

(87) International publication number:
**WO 2024/055252 (21.03.2024 Gazette 2024/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Shenzhen Yinwang Intelligent
Technologies Co., Ltd.
Shenzhen, Guangdong 518129 (CN)**

(72) Inventors:
• **GUO, Jianting
Shenzhen, Guangdong 518129 (CN)**
• **JU, Zengwei
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **DATA FUSION METHOD AND APPARATUS, AND INTELLIGENT DRIVING DEVICE**

(57) Embodiments of this application provide a data fusion method and apparatus, and an intelligent driving device. The method includes: obtaining point cloud data, where the point cloud data is obtained through detection in a first scanning direction and a second scanning direction respectively based on a first laser beam group and a second laser beam group, and the first scanning direction is different from the second scanning direction; sequentially triggering exposure of cameras in M camera groups based on trigger delays of the M camera groups to obtain M groups of image data; and fusing image data corresponding to each camera group in the M camera groups with the point cloud data to obtain data that corresponds to the camera group and that is used for perception processing. According to embodiments of this applica- tion, a fusion effect of the point cloud data obtained by a laser emitting apparatus through scanning and the image data captured by the camera can be improved, so that an ambient environment of a vehicle is more accurately identified. This is more conducive to planning and implementation of an autonomous driving task.

```
┌─────────────────────────────────────────────────────────────────┐
│                 S701: Obtain point cloud data                    │
└─────────────────────────────────────────────────────────────────┘
                                 │
                                 ▼
┌─────────────────────────────────────────────────────────────────┐
│ S702: Sequentially trigger exposure of cameras in M camera       │
│ groups based on trigger delays of the M camera groups to obtain  │
│ M groups of image data                                           │
└─────────────────────────────────────────────────────────────────┘
                                 │
                                 ▼
┌─────────────────────────────────────────────────────────────────┐
│ S703: Fuse image data corresponding to each camera group in the  │
│ M camera groups with the point cloud data to obtain data that    │
│ corresponds to the camera group and that is used for             │
│ perception processing                                            │
└─────────────────────────────────────────────────────────────────┘
```

FIG. 7

EP 4 580 247 A1

## Description

## TECHNICAL FIELD

This application relates to intelligent driving technologies, is applied to the field of fusion perception of intelligent driving, and in particular, relates to a data fusion method and apparatus, and an intelligent driving device.

## BACKGROUND

With development of society, intelligent vehicles are gradually entering people's daily life. An advanced driver-assistance system (advanced driver-assistance system, ADAS) plays an important role in an intelligent vehicle. In the advanced driver-assistance system, various sensors are mounted on the vehicle to sense an ambient environment in a driving process of the vehicle, collect data, identify, detect, and track a static or moving object, and perform systematic calculation and analysis based on map data of a navigator, so that a driver can perceive a possible danger in advance. This effectively improves comfort and safety of vehicle driving. In a word, the sensors play an important role in assisted driving and autonomous driving of the intelligent vehicle, and are likened to "eyes" of the vehicle. The sensors include vision sensors such as a vehicle-mounted camera and radar sensors like a vehicle-mounted lidar and a vehicle-mounted ultrasonic radar.

Compared with single-sensor sensing, fusion perception based on a plurality of sensors becomes a mainstream of intelligent driving. A plurality of data sources make a final sensing result more stable and reliable. This better takes advantage of each sensor and avoids a disadvantage of each sensor.

In a current multi-sensor fusion solution, a lidar has a fixed scan cycle, and a camera is triggered at a fixed frequency. In a scenario in which the lidar and the camera are fused, because a timestamp of the lidar does not match a timestamp of the camera, a fusion effect is usually poor, and consequently, an ambient environment of a vehicle cannot be accurately identified.

## SUMMARY

This application discloses a data fusion method and apparatus, and an intelligent driving device, to improve a fusion effect of point cloud data obtained by a laser emitting apparatus through scanning and image data captured by a camera, so that an ambient environment of a vehicle is more accurately identified. This is more conducive to planning and implementation of an autonomous driving task.

According to a first aspect, this application provides a data fusion method. The method includes: obtaining point cloud data, where the point cloud data is obtained through detection in a first scanning direction and a second scanning direction respectively based on a first laser beam group and a second laser beam group, and the first scanning direction is different from the second scanning direction; sequentially triggering exposure of cameras in the M camera groups based on trigger delays of the M camera groups to obtain M groups of image data, where cameras in a same camera group are exposed simultaneously, the trigger delay is related to a scan cycle of the first laser beam group and the second laser beam group, and M is a positive integer greater than or equal to 1; and fusing image data corresponding to each camera group in the M camera groups with the point cloud data to obtain data that corresponds to the camera group and that is used for perception processing.

The M camera groups may be determined based on mounting locations of a plurality of cameras on an intelligent driving device. A traveling direction of the intelligent driving device is used as a reference. In this application, the point cloud data may be fused with image data of a camera group corresponding to a front field of view of the intelligent driving device, to improve a fusion effect of the point cloud data and the image data in the front field of view. Similarly, a fusion effect of point cloud data and image data in a middle field of view and a fusion effect of point cloud data and image data in a rear field of view may also be improved. In this way, an ambient environment of the vehicle is more accurately identified. This is more conducive to planning and implementation of an autonomous driving task.

In a possible implementation, the obtaining point cloud data includes: obtaining first data, where the first data is obtained through detection by the first laser beam group in the first scanning direction; obtaining second data, where the second data is obtained through detection by the second laser beam group in the second scanning direction; and splicing the first data and the second data to obtain the point cloud data.

In the foregoing method, the first data and the second data are spliced and fused for enhancement. Compared with that of point cloud data obtained through scanning in a single direction, point density of the point cloud data in this application is higher, and accuracy of identifying the ambient environment of the vehicle is higher.

In another possible implementation, the first laser beam group and the second laser beam group are from a same laser emitting apparatus.

In still another possible implementation, the first laser beam group is from a first laser emitting apparatus, and the second laser beam group is from a second laser emitting apparatus.

In the foregoing method, two laser beam groups can be used to perform covering scanning, so that the point density of the point cloud data is higher.

In still another possible implementation, the method further includes: determining a location of each camera group in the M camera groups; and determining a trigger delay of each camera group in the camera groups based on the scan cycle and the location of each camera group in the M camera groups.

In still another possible implementation, the M camera groups include a first camera group and a second camera group, a trigger delay of the first camera group is a first delay, and a trigger delay of the second camera group is a second delay. The sequentially triggering exposure of cameras in the M camera groups based on trigger delays of the M camera groups to obtain M groups of image data includes: starting a first timer to set an initial moment; when an interval between an indicated moment of the first timer and the initial moment is the first delay, triggering exposure of a camera in the first camera group to obtain image data corresponding to the first camera group; and when an interval between an indicated moment of the first timer and the initial moment is the second delay, triggering exposure of a camera in the second camera group to obtain image data corresponding to the second camera group.

In the foregoing method, exposure of the cameras in the M camera groups is sequentially triggered based on M trigger delays to obtain the M groups of image data. Compared with a manner of simultaneously exposing all the cameras on the intelligent driving device that causes a performance problem due to centralized resource occupation and peak load contention, a manner of sequentially triggering exposure in this application can implement load balancing to some extent, thereby avoiding the problem caused by simultaneous exposure.

In still another possible implementation, the M camera groups include a front-part group, a side-part group, and a rear-part group. The front-part group includes a first camera and a second camera, and the first camera and the second camera are disposed opposite to each other at a front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at a rear part of the intelligent driving device.

In still another possible implementation, the M camera groups further include a forward group, the forward group includes a seventh camera, and the seventh camera faces the traveling direction of the intelligent driving device.

In still another possible implementation, image data corresponding to at least two of the M camera groups is fused to obtain data used for perception processing.

According to a second aspect, this application provides an intelligent driving device, including a computing platform and M camera groups. The computing platform is configured to: obtain point cloud data, where the point cloud data is obtained through detection in a first scanning direction and a second scanning direction respectively based on a first laser beam group and a second laser beam group, and the first scanning direction is different from the second scanning direction; sequentially trigger exposure of cameras in the M camera groups based on trigger delays of the M camera groups to obtain M groups of image data, where cameras in a same camera group are exposed simultaneously, the trigger delay is related to a scan cycle of the first laser beam group and the second laser beam group, and M is a positive integer greater than or equal to 1; and fuse image data corresponding to each camera group in the M camera groups with the point cloud data to obtain data that corresponds to the camera group and that is used for perception processing.

In a possible implementation, when obtaining the point cloud data, the computing platform is configured to: obtain first data, where the first data is obtained through detection by the first laser beam group in the first scanning direction; obtain second data, where the second data is obtained through detection by the second laser beam group in the second scanning direction; and splice the first data and the second data to obtain the point cloud data.

In another possible implementation, the first laser beam group and the second laser beam group are from a same laser emitting apparatus.

In still another possible implementation, the intelligent driving device further includes a first laser emitting apparatus and a second laser emitting apparatus. The first laser beam group is from the first laser emitting apparatus, and the second laser beam group is from the second laser emitting apparatus.

In still another possible implementation, the first laser emitting apparatus and the second laser emitting apparatus are lidar apparatuses.

In still another possible implementation, the computing platform is further configured to: determine a location of each camera group in the M camera groups; and determine a trigger delay of each camera group in the camera groups based on the scan cycle and the location of each camera group in the M camera groups.

In still another possible implementation, the M camera groups include a first camera group and a second camera group. A trigger delay of the first camera group is a first delay. A trigger delay of the second camera group is a second delay. The computing platform is further configured to: start a first timer to set an initial moment; when an interval between an indicated moment of the first timer and the initial moment is the first delay, trigger exposure of a camera in the first camera group to obtain image data corresponding to the first camera group; and when an interval between the indicated moment of the first timer and the initial moment is the second delay, trigger exposure of a camera in the second camera group to obtain image data corresponding to the second camera group.

In still another possible implementation, the M camera groups include a front-part group, a side-part group, and a rear-part group. The front-part group includes a first camera and a second camera, and the first camera and the second camera are disposed opposite to each other at a front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at a rear part of the intelligent driving device.

In still another possible implementation, the M camera groups further include a forward group, the forward group includes a seventh camera, and the seventh camera faces the traveling direction of the intelligent driving device.

For technical effects brought by the second aspect or the possible implementations, refer to the descriptions of the technical effects brought by the first aspect or the corresponding implementations.

According to a third aspect, this application provides a data fusion apparatus. The data fusion apparatus is a vehicle-mounted computing platform, a cloud server, or a chip system. The data fusion apparatus includes a processor and a memory. The memory and the processor are interconnected through a line. The processor is configured to obtain a computer program stored in the memory, and when the computer program is invoked by the processor, the data fusion apparatus is configured to perform the data fusion method according to the first aspect and the implementations.

According to a fourth aspect, this application provides a computer-readable storage medium. The computer-readable storage medium stores computer instructions, and when the computer instructions are run on a processor, the method according to any one of the first aspect or the possible implementations of the first aspect is implemented.

According to a fifth aspect, this application provides a computer program product. The computer program product includes computer program code, and when the computer program code is run on a computer, the method according to any one of the first aspect or the possible implementations of the first aspect is implemented.

According to a sixth aspect, this application provides a chip. The chip includes a circuit, and the circuit is configured to implement the method according to any one of the first aspect or the possible implementations of the first aspect.

## BRIEF DESCRIPTION OF DRAWINGS

FIG. 1 is a diagram of a structure of an intelligent driving device according to an embodiment of this application;
FIG. 2 is a diagram of a camera group according to an embodiment of this application;

FIG. 3 is a diagram of another camera group according to an embodiment of this application;
FIG. 4 is a diagram of a structure of another intelligent driving device according to an embodiment of this application;
FIG. 5 is a diagram of a traveling control apparatus of an intelligent driving device according to an embodiment of this application;
FIG. 6 is a diagram of location distribution of cameras on an intelligent driving device according to an embodiment of this application;
FIG. 7 is a schematic flowchart of a data fusion method according to an embodiment of this application;
FIG. 8a is a top view of a first laser beam group and a second laser beam group according to an embodiment of this application;
FIG. 8b is a side view of a first laser beam group and a second laser beam group according to an embodiment of this application;
FIG. 9a is another top view of a first laser beam group and a second laser beam group according to an embodiment of this application;
FIG. 9b is another side view of a first laser beam group and a second laser beam group according to an embodiment of this application;
FIG. 10 is a diagram of an ambient environment according to an embodiment of this application;
FIG. 11 is a diagram of point cloud data according to an embodiment of this application;
FIG. 12 is a diagram of image data corresponding to a camera group according to an embodiment of this application;
FIG. 13 is a diagram of other image data corresponding to a camera group according to an embodiment of this application;
FIG. 14 is a diagram of a front field of view, a middle field of view, and a rear field of view according to an embodiment of this application;
FIG. 15 is a diagram of a structure of a data fusion apparatus according to an embodiment of this application;
FIG. 16 is a diagram of an intelligent driving device according to an embodiment of this application; and
FIG. 17 is a diagram of a structure of another data fusion apparatus according to an embodiment of this application.

## DESCRIPTION OF EMBODIMENTS

The following describes embodiments of this application with reference to the accompanying drawings in embodiments of this application.

In this application, the term "example", "for example", or the like is used to give an example, an illustration, or a description. Any embodiment or design scheme described as an "example" or "for example" in this application should not be explained as being more preferred or having more advantages than another embodiment or design scheme. Exactly, use of the terms such as "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

"First", "second", "third", "fourth", and the like mentioned in embodiments of this application are used to distinguish between different objects, but are not used to describe a particular order of the objects. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

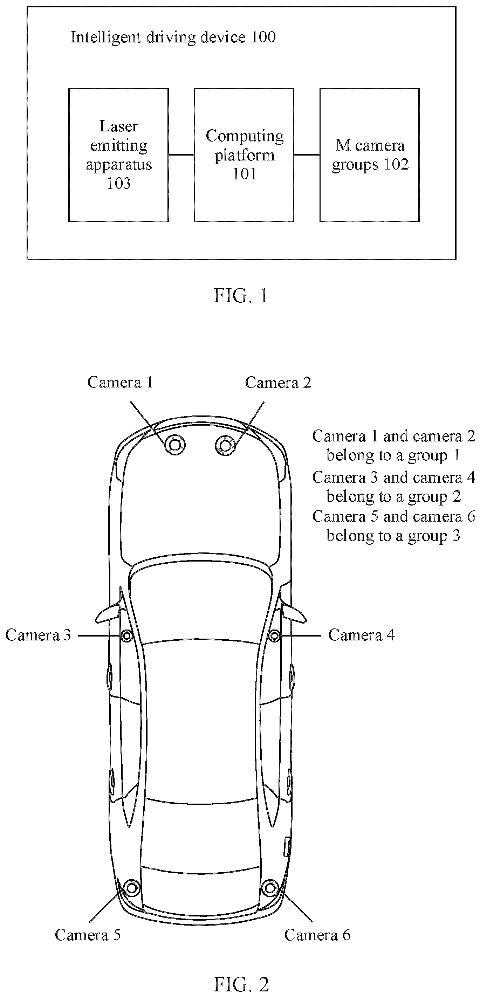

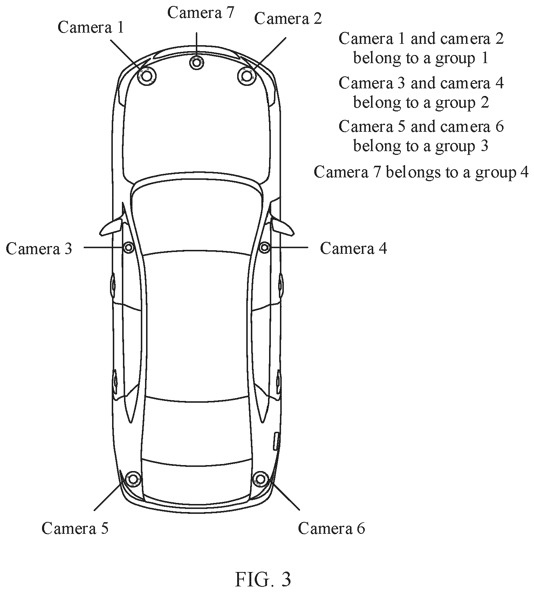

FIG. 1 is a diagram of a structure of an intelligent driving device 100 according to an embodiment of this application. The intelligent driving device 100 includes a computing platform 101 and M camera groups 102. M is a positive integer greater than or equal to 1. M may alternatively be a positive integer greater than or equal to 2. The computing platform 101 may be carried in the intelligent driving device 100, or may not be carried in the intelligent driving device 100. For example, the computing platform 101 may be carried in a cloud server. This is not limited in embodiments of this application. The computing platform 101 may be understood as an apparatus having a computing capability. The computing platform 101 is configured to: obtain point cloud data and M groups of image data, and fuse image data corresponding to each camera group in the M groups of image data with the point cloud data, to obtain data that corresponds to a camera group and that is used for perception processing. For specific related descriptions, refer to the following embodiments. Each of the M camera groups includes at least one camera. In an example, FIG. 2 is a diagram of a camera group according to an embodiment of this application. M=3. Three camera groups are a group 1, a group 2, and a group 3. The intelligent driving device 100 includes six cameras: a camera 1, a camera 2, a camera 3, a camera 4, a camera 5, and a camera 6. Each camera group includes two cameras. The camera 1 and the camera 2 belong to the group 1, and the camera 1 and the camera 2 are disposed opposite to each other at a front part of the intelligent driving device 100. The camera 3 and the camera 4 belong to the group 2, and the camera 3 and the camera 4 are disposed opposite to each other on two sides of the intelligent driving device 100. The camera 5 and the camera 6 belong to the group 3, and the camera 5 and the camera 6 are disposed opposite to each other at a rear part of the intelligent driving device 100. In another example, FIG. 3 is a diagram of another camera group according to an embodiment of this application. M=4. Four camera groups are a group 1, a group 2, a group 3, and a group 4. The intelligent driving device 100 includes six cameras: a camera 1, a camera 2, a camera 3, a camera 4, a camera 5, a camera 6, and a camera 7. Each camera group includes at least one camera. The camera 1 and the camera 2 belong to the group 1, and the camera 1 and the camera 2 are disposed opposite to each other at a front part of the intelligent driving device 100. The camera 3 and the camera 4 belong to the group 2, and the camera 3 and the camera 4 are disposed opposite to each other on two sides of the intelligent driving device 100. The camera 5 and the camera 6 belong to the group 3, and the camera 5 and the camera 6 are disposed opposite to each other at a rear part of the intelligent driving device 100. The camera 7 belongs to the group 4, and the camera 7 faces a traveling direction of the intelligent driving device 100. FIG. 2 and FIG. 3 are used as examples to describe locations of cameras on the intelligent driving device when a quantity of cameras on the intelligent driving device is an even number or an odd number. The locations of the cameras may vary with a vehicle type of the intelligent driving device or the like. This is not limited in embodiments of this application.

The intelligent driving device 100 may further include one or more laser emitting apparatuses 103. When the intelligent driving device 100 includes one laser emitting apparatus 103, the laser emitting apparatus 103 is configured to generate a first laser beam group and a second laser beam group. In other words, it may be understood that the first laser beam group and the second laser beam group are from a same laser emitting apparatus. When the intelligent driving device 100 includes two laser emitting apparatuses 103, for example, a first laser emitting apparatus and a second laser emitting apparatus, the first laser emitting apparatus is configured to generate a first laser beam group, and the second laser emitting apparatus is configured to generate a second laser beam group. In other words, it may be understood that the first laser beam group and the second laser beam group are from different laser emitting apparatuses. The first laser beam group performs detection in a first scanning direction to obtain first data, and the second laser beam group performs detection in a second scanning direction to obtain second data. The first data and the second data are spliced to obtain point cloud data. For details, refer to related descriptions in the following embodiments.

It may be understood that the structure of the intelligent driving device in FIG. 1 is merely an example implementation in embodiments of this application. The intelligent driving device in embodiments of this application may further include more components as required.

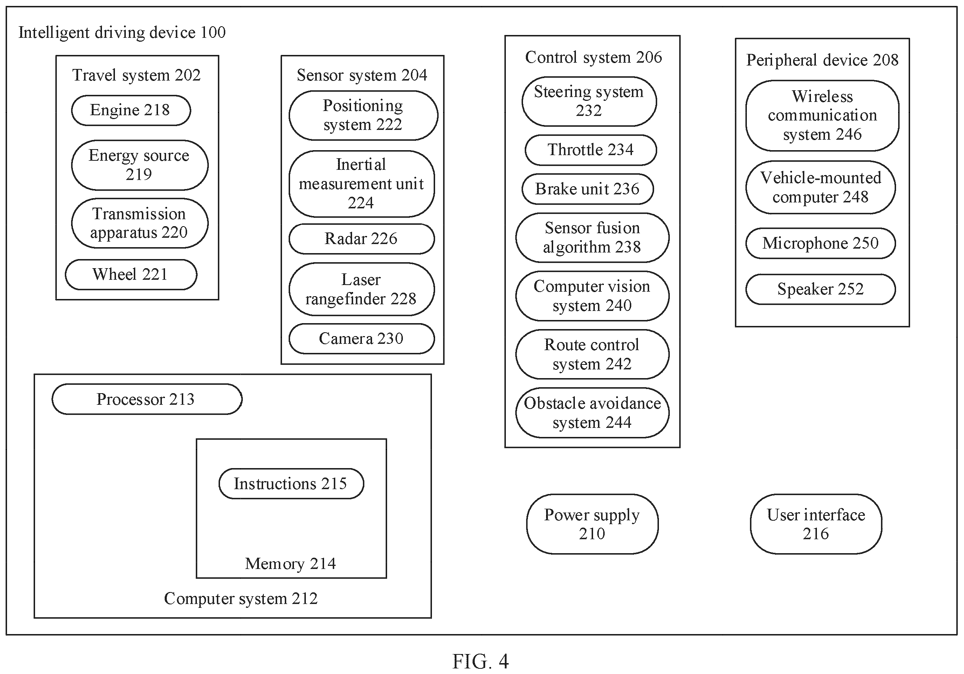

FIG. 4 further describes the structure of the intelligent driving device 100 based on FIG. 1. The intelligent driving device 100 may include various subsystems, for example, a travel system 202, a sensor system 204, a control system 206, one or more peripheral devices 208, a power supply 210, a computer system 212, and a user interface 216. Optionally, the intelligent driving device 100 may include more or fewer subsystems, and each subsystem may include a plurality of elements. In addition, each subsystem and the elements of the intelligent driving device 100 may be interconnected in a wired or wireless manner.

The travel system 202 may include a component that provides power for the intelligent driving device 100 to move. In an embodiment, the travel system 202 may include an engine 218, an energy source 219, a transmission apparatus 220, and a wheel/tire 221. The engine 218 may be an internal combustion engine, an electric motor, an air compression engine, or an engine combination of another type, for example, a hybrid engine including a gasoline engine and an electric motor, or a hybrid engine including an internal combustion engine and an air compression engine. The engine 218 converts the energy source 219 into mechanical energy.

Examples of the energy source 219 include gasoline, diesel, another oil-based fuel, propane, another compressed gas-based fuel, ethanol, a solar panel, a battery, and another power source. The energy source 219 may also provide energy for another system of the intelligent driving device 100.

The transmission apparatus 220 may transmit mechanical power from the engine 218 to the wheel 221. The transmission apparatus 220 may include a gearbox, a differential, and a drive shaft. In an embodiment, the transmission apparatus 220 may further include another device, for example, a clutch. The drive shaft may include one or more shafts that may be coupled to one or more wheels 221.

The sensor system 204 may include several sensors that sense information about an ambient environment of the intelligent driving device 100. For example, the sensor system 204 may include a positioning system 222 (the positioning system may be a GPS system, a BeiDou system, or another positioning system), an inertial measurement unit (inertial measurement unit, IMU) 224, a radar 226, a laser rangefinder 228, and a camera 230. The sensor system 204 may further include sensors (for example, an in-vehicle air quality monitor, a fuel gauge, and an oil temperature gauge) in an internal system of the monitored intelligent driving device 100. Sensor data from one or more of these sensors may be used to detect an object and corresponding features (a location, a shape, a direction, a speed, and the like) of the object. Such detection and identification are key functions for safe operation of the autonomous intelligent driving device 100.

The positioning system 222 may be configured to estimate a geographical location of the intelligent driving device 100. The IMU 224 is configured to sense and detect, based on inertia acceleration, a location and an orientation change of the intelligent driving device 100. In an embodiment, the IMU 224 may be a combination of an accelerometer and a gyroscope.

The radar 226 may sense, by using a radio signal, an object in the ambient environment of the intelligent driving device 100. In some embodiments, in addition to sensing an object, the radar 226 may be further configured to sense a speed and/or a moving direction of the object. In an example, the radar 226 may be the laser emitting apparatus 103 in FIG. 1. For example, the intelligent driving device 100 includes one lidar apparatus. The lidar apparatus includes two laser beam groups: a first laser beam group and a second laser beam group. The first laser beam group includes at least one laser beam, and the second laser beam group includes at least one laser beam. The first laser beam group performs detection in a first scanning direction to obtain first data, and the second laser beam group performs detection in a second scanning direction to obtain second data. The first scanning direction is different from the second scanning direction. In other words, it may be understood that rotation directions of the first laser beam group and the second laser beam group are different. Optionally, the first scanning direction may be a clockwise direction, and the second scanning direction may be an anticlockwise direction. The first data and the second data may be understood as point cloud information. For another example, the intelligent driving device 100 includes two lidar apparatuses: a lidar apparatus 1 and a lidar apparatus 2. The lidar apparatus 1 includes a laser beam group, which is a first laser beam group. The lidar apparatus 2 includes a laser beam group, which is a second laser beam group. The first laser beam group performs detection in a first scanning direction to obtain first data. The second laser beam group performs detection in a second scanning direction to obtain second data. The first scanning direction is different from the second scanning direction.

The laser rangefinder 228 may sense, by using a laser, an object in an environment in which the intelligent driving device 100 is located. In some embodiments, the laser rangefinder 228 may include one or more laser sources, a laser scanner, one or more detectors, and another system component.

The camera 230 may be configured to capture a plurality of images of the ambient environment of the intelligent driving device 100. The camera 230 may be a static camera or a video camera. There may be one or more cameras 230. The cameras 230 may be grouped into the M camera groups 102 in FIG. 1. For example, distribution of the cameras 230 on the intelligent driving device 100 may be as shown in FIG. 2 or FIG. 3.

The control system 206 controls operations of the intelligent driving device 100 and components of the intelligent driving device 100. The control system 206 may include various elements, including a steering system 232, a throttle 234, a brake unit 236, a sensor fusion algorithm 238, a computer vision system 240, a route control system 242, and an obstacle avoidance system 244.

The steering system 232 may operate to adjust a heading direction of the intelligent driving device 100. For example, in an embodiment, the steering unit may be a steering wheel system.

The throttle 234 is configured to control an operation speed of the engine 218, to control a speed of the intelligent driving device 100.

The brake unit 236 is configured to control the intelligent driving device 100 to decelerate. The brake unit 236 may slow down the wheel 221 through friction. In another embodiment, the brake unit 236 may convert kinetic energy of the wheel 221 into a current. The brake unit 236 may alternatively reduce a rotational speed of the wheel 221 in another form, to control the speed of the intelligent driving device 100.

The computer vision system 240 may operate to process and analyze an image captured by the camera 230, to identify an object and/or a feature in the ambient environment of the intelligent driving device 100, and/or process and analyze data information captured by the radar 226. The object and/or the feature may include a traffic signal, a road boundary, and an obstacle. The computer vision system 240 may use an object identification algorithm, a structure from motion (structure from motion, SFM) algorithm, video tracking, and another computer vision technology. In some embodiments, the computer vision system 240 may be configured to: draw a map for an environment, track an object, estimate a speed of an object, and the like. Optionally, the computer vision system 240 may be the computing platform 101 in FIG. 1.

The route control system 242 is configured to determine a traveling route of the intelligent driving device 100. In some embodiments, the route control system 242 may determine the traveling route for the intelligent driving device 100 with reference to data from the sensor fusion algorithm 238, the positioning system 222, and one or more predetermined maps.

The obstacle avoidance system 244 is configured to identify, evaluate, and avoid or bypass, in another manner, a potential obstacle in the environment of the intelligent driving device 100.

Certainly, in an example, the control system 206 may additionally or alternatively include a component other than those shown and described. Alternatively, some of the foregoing components may be removed.

The intelligent driving device 100 interacts with an external sensor, another vehicle, another computer system, or a user by using the peripheral device 208. The peripheral device 208 may include a wireless communication system 246, a vehicle-mounted computer 248, a microphone 250, and/or a speaker 252.

In some embodiments, the peripheral device 208 provides a means for a user of the intelligent driving device 100 to interact with the user interface 216. For example, the vehicle-mounted computer 248 may provide information for the user of the intelligent driving device 100. The user interface 216 may further operate the vehicle-mounted computer 248 to receive an input of the user. The vehicle-mounted computer 248 may be operated by using a touchscreen. In another case, the peripheral device 208 may provide a means for the intelligent driving device 100 to communicate with another device located in the vehicle. For example, the microphone 250 may receive an audio (for example, a voice command or another audio input) from the user of the intelligent driving device 100. Similarly, the speaker 252 may output an audio to the user of the intelligent driving device 100.

The wireless communication system 246 may communicate with, in a wireless manner, one or more devices directly or through a communication network. For example, the wireless communication system 246 may use 3G cellular communication such as CDMA, EVD0, or GSM/GPRS, or 4G cellular communication such as LTE, or 5G cellular communication. The wireless communication system 246 may communicate with a wireless local area network (wireless local area network, WLAN) through Wi-Fi. In some embodiments, the wireless communication system 246 may directly communicate with a device through an infrared link, Bluetooth, or ZigBee. The wireless communication system 246 may include one or more dedicated short-range communications (dedicated short-range communications, DSRC) devices. These devices may include public and/or private data communication between vehicles and/or roadside stations.

The power supply 210 may supply power to various components of the intelligent driving device 100. In an embodiment, the power supply 210 may be a rechargeable lithium-ion or lead-acid battery. One or more battery packs of such a battery may be configured as a power supply for supplying power to various components of the intelligent driving device 100. In some embodiments, the power supply 210 and the energy source 219 may be implemented together.

Some or all functions of the intelligent driving device 100 are controlled by the computer system 212. The computer system 212 may include at least one processor 213. The processor 213 executes instructions 215 stored in a non-transient computer-readable medium like a memory 214. The computer system 212 may alternatively be a plurality of computing devices that control individual components or subsystems of the intelligent driving device 100 in a distributed manner.

The processor 213 may be any conventional processor like a commercially available CPU. Alternatively, the processor may be an ASIC or another hardware-based processor.

In various aspects described herein, the processor may be away from the vehicle and communicate with the vehicle in a wireless manner. In other aspects, some of the processes described herein are performed by a processor disposed in the vehicle, and others are performed by a remote processor.

In some embodiments, the memory 214 may include the instructions 215 (for example, program logic), and the instructions 215 may be executed by the processor 213 to perform various functions of the intelligent driving device 100, including the functions described above. The memory 214 may also include additional instructions, including instructions for sending data to, receiving data from, interacting with, and/or controlling one or more of the travel system 202, the sensor system 204, the control system 206, and the peripheral device 208.

The memory 214 may also store data in addition to the instructions 215, for example, point cloud data, M groups of image data corresponding to M camera groups, and other information. Such information may be used by the intelligent driving device 100 and the computer system 212 during operation of the intelligent driving device 100 in an autonomous mode, a semi-autonomous mode, and/or a manual mode.

The user interface 216 is configured to provide information for the user of the intelligent driving device 100 or receive information from the user. Optionally, the user interface 216 may include one or more input/output devices within a set of peripheral devices 208, such as the wireless communication system 246, the vehicle-mounted computer 248, the microphone 250, and the speaker 252.

The computer system 212 may control functions of the intelligent driving device 100 based on inputs received from various subsystems (for example, the travel system 202, the sensor system 204, and the control system 206) and the user interface 216. For example, the computer system 212 may use an input from the control system 206 to control the steering system 232 to avoid an obstacle detected by the sensor system 204 and the obstacle avoidance system 244. In some embodiments, the computer system 212 may operate to provide control on the intelligent driving device 100 and the subsystems of the intelligent driving device 100 in many aspects.

Optionally, one or more of the foregoing components may be mounted separately from or associated with the intelligent driving device 100. For example, the memory 214 may be partially or completely separated from the intelligent driving device 100. The foregoing components may be communicatively coupled together in a wired and/or wireless manner.

Optionally, the foregoing components are merely examples. During actual application, the components in the foregoing modules may be added or deleted according to an actual requirement. FIG. 4 should not be understood as any limitation on embodiments of this application.

The intelligent driving device 100 may be a car, a truck, a motorcycle, a bus, a ship, an airplane, a helicopter, a lawn mower, an entertainment vehicle, a playground vehicle, a construction device, a tram, a golf cart, a train, a cart, a smart home device, or the like. This is not particularly limited in embodiments of this application.

It may be understood that the structure of the intelligent driving device in FIG. 4 is merely an example implementation in embodiments of this application. The intelligent driving device in embodiments of this application includes but is not limited to the structure.

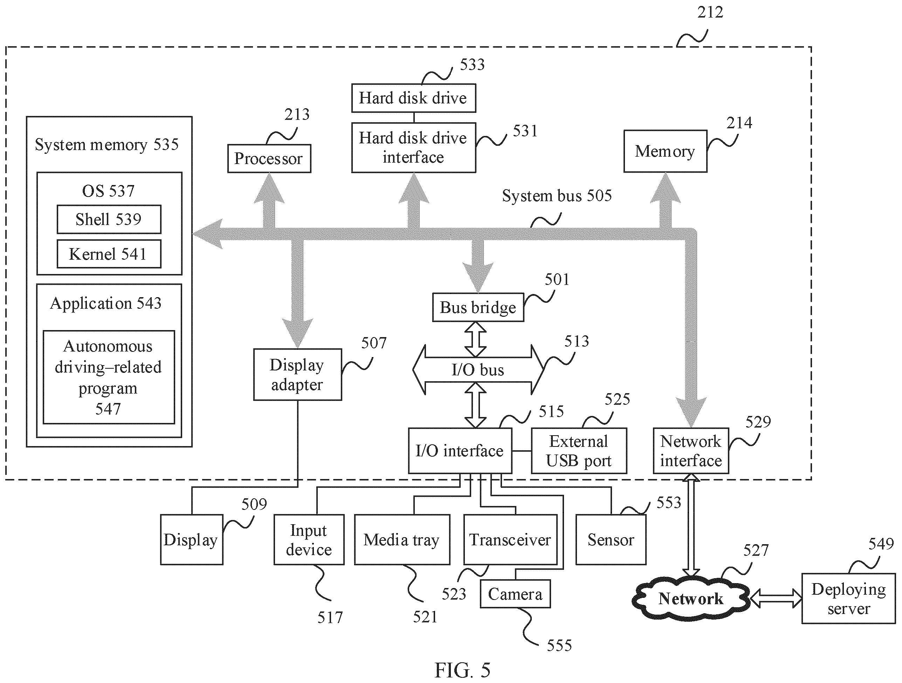

FIG. 5 is a diagram of a traveling control apparatus of an intelligent driving device according to an embodiment of this application. The traveling control apparatus is applied to FIG. 4, and is equivalent to the computer system 212 shown in FIG. 4. The traveling control apparatus may include a processor 213, and the processor 213 is coupled to a system bus 505. The processor 213 may be one or more processors, and each of the processors may include one or more processor cores. A memory 214 may store related data information, and the memory 214 is coupled to the system bus 505. A display adapter (display adapter) 507 may drive a display 509, and the display 509 is coupled to the system bus 505. The system bus 505 is coupled to an input/output (I/O) bus 513 through a bus bridge 501. An I/O interface 515 is coupled to the I/O bus 513. The I/O interface 515 communicates with a plurality of I/O devices, for example, an input device 517 (for example, a keyboard, a mouse, or a touchscreen) and a media tray (media tray) 521 (for example, a CD-ROM or a multimedia interface). A transceiver 523 (which may send and/or receive a radio communication signal) and a camera 555 (which may capture static and dynamic digital video images) are coupled to an external USB interface 525. Optionally, an interface connected to the I/O interface 515 may be a USB interface.

The processor 213 may be any conventional processor, including a reduced instruction set computer (reduced instruction set computer, RISC), a complex instruction set computer (complex instruction set computer, CISC), or a combination thereof. Optionally, the processor may be an application-specific integrated circuit ASIC. Optionally, the processor 213 may be a neural network processor or a combination of a neural network processor and the foregoing conventional processor.

Optionally, in various embodiments described herein, the computer system 212 may be located away from the intelligent driving device and may communicate with the intelligent driving device in a wireless manner. In other aspects, some of the processes described in this specification are performed by a processor disposed in the intelligent driving device, and others are performed by a remote processor.

The computer system 212 may communicate with a software deploying server 549 through a network interface 529. The network interface 529 is a hardware network interface, for example, a network adapter. A network 527 may be an external network like the Internet, or may be an internal network like the Ethernet or a virtual private network (virtual private network, VPN). Optionally, the network 527 may alternatively be a wireless network, for example, a Wi-Fi network or a cellular network.

The transceiver 523 (which may send and/or receive a radio communication signal) may use various wireless communication manners such as but not limited to a second generation mobile communication network (2nd generation mobile network, 2G), 3G, 4G, or 5G, or may use a DSRC technology, a long term evolution-vehicle-to-everything (long term evolution-vehicle-to-everything, LTE-V2X) technology, or the like. A main function of the transceiver 523 is to receive information data sent by an external device, and send, to the external device for storage and analysis, information data generated when the intelligent driving device travels on a target road section.

A hard disk drive interface 531 is coupled to the system bus 505. The hard disk drive interface 531 is connected to a hard disk drive 533. A system memory 535 is coupled to the system bus 505. Data running in the system memory 535 may include an operating system 537 and an application 543 of the computer system 212.

The system memory 535 is coupled to the system bus 505. For example, in this application, the system memory 535 may be configured to store traveling information of the vehicle passing the target road section in the memory in a specific format.

The operating system (operating system, OS) 537 includes a shell (shell) 539 and a kernel (kernel) 541. The shell 539 is an interface between a user and the kernel of the operating system. The shell 539 is an outermost layer of the operating system. The shell 539 manages interaction between the user and the operating system: waiting for an input of the user, explaining the input of the user to the operating system, and processing various output results of the operating system.

The kernel 541 includes parts that are in the operating system and that are used to manage a memory, a file, a peripheral device, and a system resource. When directly interacting with hardware, the kernel of the operating system usually runs a process, provides inter-process communication, and provides functions such as CPU time slice management and interruption, memory management, and I/O management.

The application 543 includes an autonomous driving-related program 547, for example, a program for managing interaction between an autonomous driving vehicle and an obstacle on a road, a program for controlling a route or a speed of the autonomous driving vehicle, and a program for controlling interaction between the autonomous driving vehicle and another autonomous driving vehicle on the road. The application 543 also exists in a system of a deploying server (deploying server) 549. In an embodiment, when the autonomous driving-related program 547 needs to be executed, the computer system 212 may download the autonomous driving-related program 547 from the deploying server 549.

A sensor 553 is associated with the computer system 212. The sensor 553 is configured to detect an ambient environment of the computer system 212. For example, the sensor 553 may detect an animal, a vehicle, an obstacle, a crosswalk, and the like. Further, the sensor may detect an environment around an object like the animal, the vehicle, the obstacle, and the crosswalk, for example, an environment around the animal, for example, another animal that appears around the animal, a weather condition, and brightness of the ambient environment. Optionally, if the computer system 212 is located in an autonomous driving vehicle, the sensor may be a camera, an infrared sensor, a chemical detector, a microphone, or the like.

It may be understood that the traveling control apparatus of an intelligent driving device in FIG. 5 is merely an example implementation in embodiments of this application. The traveling control apparatus applied to the intelligent driving device in embodiments of this application includes but is not limited to the foregoing structure.

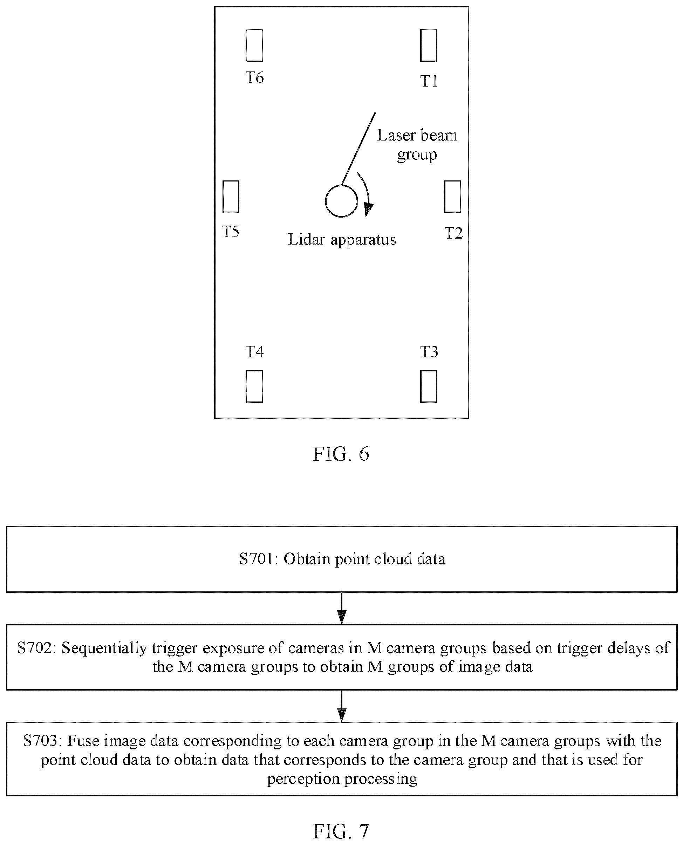

In a current multi-sensor fusion solution, a lidar apparatus has a fixed scan cycle, and a camera is triggered at a fixed frequency. FIG. 6 is a diagram of location distribution of cameras on an intelligent driving device. The intelligent driving device includes one lidar apparatus and six cameras, and the six cameras are T1, T2, T3, T4, T5, and T6. The lidar apparatus is located in the middle of the intelligent driving device, and the lidar apparatus emits only one laser beam group. The laser beam group includes at least one laser beam. A scanning start location of the lidar apparatus may be a location of the camera T1, and the lidar apparatus may rotate clockwise from the location of the camera T1 to perform a round of scanning in sequence. The cameras are scanned at different time. For example, a time difference between time when the location of the camera T1 is scanned and time when a location of the camera T6 is scanned is large, and correspondingly, a time difference between corresponding point cloud data is also large. Usually, a scanning start angle with a largest such difference is placed in a direction that has a low requirement on precision, for example, a backward direction. For example, a scanning start location of the lidar apparatus may be a location of the camera T3, and the lidar apparatus may rotate clockwise from the location of the camera T3 to perform a round of scanning in sequence. However, this is only a workaround. In this manner, point cloud compensation may be performed. However, in a scenario of an oncoming vehicle, because a speed of the opposite party is inaccurately estimated, accuracy of point cloud compensation is low. However, for camera triggering, in a solution, the six cameras may be triggered at the same time. To be specific, six pieces of image data corresponding to the six cameras may be obtained at a same moment, to trigger corresponding model inference. However, this causes a performance problem due to centralized resource occupation and peak load contention. In another solution, different cameras may be triggered at different time. To be specific, camera exposure is triggered only when the lidar apparatus scans a corresponding position of a camera, to obtain corresponding image data. In this way, optimal matching between a point cloud and an image at a single angle of view can be achieved. In addition, load balancing is implemented to some extent. However, due to a time difference between triggering time of the cameras, there is a time difference between obtained image data. In a high-speed motion scenario, effective spicing and fusion cannot be performed. Therefore, in a scenario in which the lidar and the camera are fused, because a timestamp of the lidar does not match a timestamp of the camera, a fusion effect is usually poor, and consequently, the ambient environment of the vehicle cannot be accurately identified. To resolve the foregoing problem, embodiments of this application provide the following solutions.

Based on the structures of the intelligent driving device provided in FIG. 1 and FIG. 4 and the vehicle traveling control apparatus that is applied to the intelligent driving device and that is provided in FIG. 5, this application provides a data fusion method.

FIG. 7 is a schematic flowchart of a data fusion method according to an embodiment of this application. The method may be applied to the intelligent driving device in FIG. 1. The computing platform in the intelligent driving device may be configured to support and perform step S701 to step S703 in a method procedure shown in FIG. 7. The method may be applied to an intelligent driving scenario. Intelligent driving includes intelligent assisted driving, autonomous driving, self-driving, and the like. This is not limited in embodiments of this application. The method may include the following step S701 to step S703.

S701: Obtain point cloud data.

The point cloud data is obtained through detection in a first scanning direction and a second scanning direction respectively based on a first laser beam group and a second laser beam group. Specifically, the obtaining point cloud data may include: obtaining first data and second data, where the first data is obtained through detection by the first laser beam group in the first scanning direction, and the second data is obtained through detection by the second laser beam group in the second scanning direction; and then splicing the first data and the second data to obtain the point cloud data.

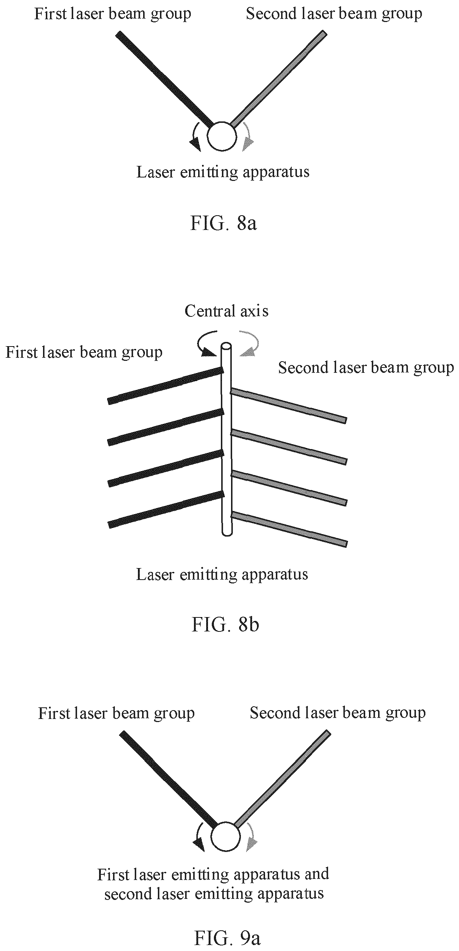

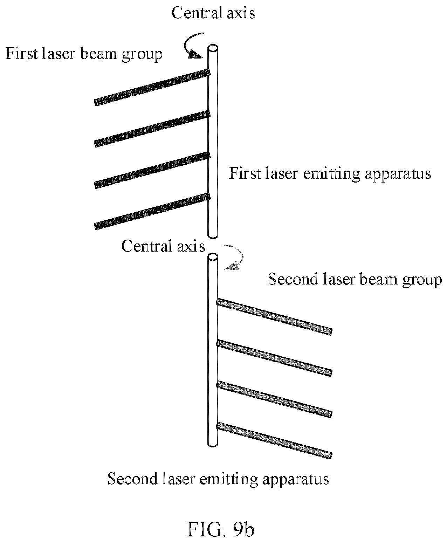

In an implementation, the first laser beam group and the second laser beam group are from a same laser emitting apparatus, and the laser emitting apparatus may be referred to as a bidirectional lidar apparatus. In another implementation, the first laser beam group is from a first laser beam emitting apparatus, and the second laser beam group is from a second laser beam emitting apparatus. In other words, it may be understood that the first laser beam group and the second laser beam group are from different laser emitting apparatuses, and the first laser beam emitting apparatus and the second laser beam emitting apparatus may be lidar apparatuses. The first laser beam group includes at least one laser beam, and the second laser beam group includes at least one laser beam. In an example, when the first laser beam group and the second laser beam group are from a same laser emitting apparatus, a top view of the first laser beam group and the second laser beam group is shown in FIG. 8a, and a side view of the first laser beam group and the second laser beam group is shown in FIG. 8b. In another example, when the first laser beam group and the second laser beam group are from different laser emitting apparatuses, a top view of the first laser beam group and the second laser beam group is shown in FIG. 9a, and a side view of the first laser beam group and the second laser beam group is shown in FIG. 9b.

That the first scanning direction is different from the second scanning direction may be understood as that rotation directions of the first laser beam group and the second laser beam group are different. For example, the first scanning direction is a clockwise direction, and the second scanning direction is an anticlockwise direction. For another example, the first scanning direction is an anticlockwise direction, and the second scanning direction is a clockwise direction.

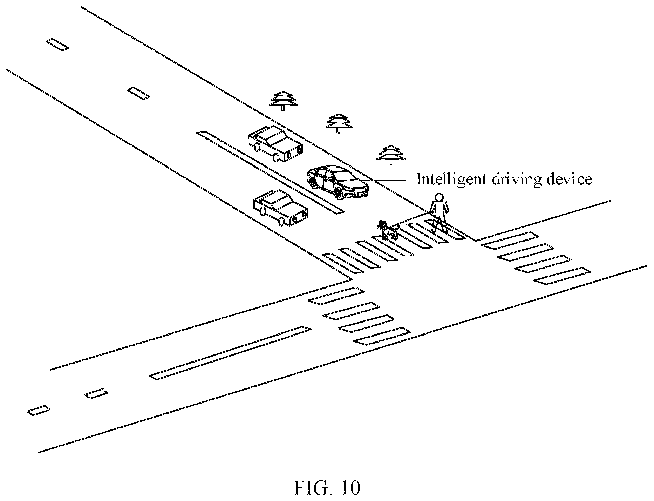

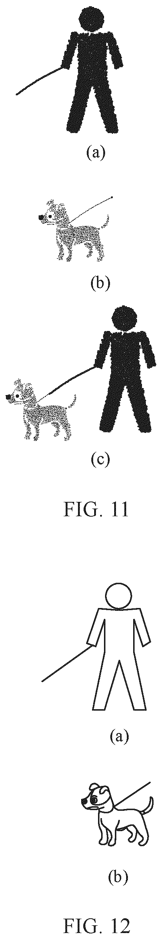

The point cloud data may be partial environment point cloud data, but not complete environment point cloud data. The first data is data obtained through scanning in a specific sector range by the first laser beam group in the first scanning direction, and the second data is data obtained through scanning in a specific sector range by the second laser beam group in the second scanning direction. Optionally, scan cycles of the first laser beam group and the second laser beam group are the same. In other words, it may be understood that scanning speeds of the first laser beam group and the second laser beam group are the same. Optionally, scanning start locations of the first laser beam group and the second laser beam group may be adjusted. The splicing the first data and the second data may be understood as rotating and translating the first data and the second data to a unified coordinate system, so that the first data and the second data can form partial environment point cloud data, that is, may be understood as a process of registering overlapping parts of the first data and the second data. Splicing may be understood as point cloud splicing, integration, or the like. This is not limited in embodiments of this application. In an example, FIG. 10 is a diagram of an ambient environment according to an embodiment of this application. Herein, (a) in FIG. 11 is a diagram of first data obtained through detection by a first laser beam group in a first scanning direction, where a traveling direction of an intelligent driving device is used as a reference, and the first scanning direction is an anticlockwise direction; (b) in FIG. 11 is a diagram of second data obtained through detection by a second laser beam group in a second scanning direction, where the traveling direction of the intelligent driving device is used as a reference, and the second scanning direction is a clockwise direction; and (c) in FIG. 11 is a diagram of point cloud data obtained by splicing the first data and the second data.

S702: Sequentially trigger exposure of cameras in M camera groups based on trigger delays of the M camera groups to obtain M groups of image data.

Cameras in a same camera group are exposed simultaneously. For example, if a camera group includes a camera 1 and a camera 2, the camera 1 and the camera 2 are exposed simultaneously. A quantity of pieces of image data in each of the M groups of image data is the same as a quantity of cameras in each group. For example, one camera group includes a camera 1 and a camera 2. Correspondingly, there are two pieces of image data of the camera group. In other words, the two pieces of image data are one group of image data, namely, image data corresponding to the camera group. M is a positive integer greater than or equal to 1. M may alternatively be a positive integer greater than or equal to 2.

The trigger delay is related to the scan cycles of the first laser beam group and the second laser beam group, and the scan cycle may be understood as a scanning speed. The trigger delay is obtained in the following manner: determining a location of each camera group in the M camera groups, and determining a trigger delay of each camera group based on the scan cycle and the location of each camera group in the M camera groups. A location of each camera in the M camera groups may be a spatial location at which the camera is distributed. For example, the camera may be distributed at a front part, on either side, or at a rear part of the intelligent driving device. The trigger delay of each camera group is determined based on the scan cycle and the location of each camera group in the M camera groups, as shown in Formula (1), and is specifically as follows:

$$\Delta_{i,j} = \frac{\theta_{i,j}}{\varphi_j} \quad (1).$$

Herein, $\Delta_{i,j}$ is a trigger delay of an $i^{th}$ camera ($i \in (0, M]$) during scanning of a $j^{th}$ laser beam group ($j \in (0,2]$), $\theta_{i,j}$ is an offset angle between the $i^{th}$ camera and a scanning start angle of the $j^{th}$ laser beam group from which the $j^{th}$ laser beam group rotates and performs scanning in a scanning direction of the $j^{th}$ laser beam group, and $\varphi_j$ is a scanning angular velocity of the $j^{th}$ laser beam group.

Optionally, the M camera groups include a front-part group, a side-part group, and a rear-part group. The front-part group includes a first camera and a second camera, and the first camera and the second camera are disposed opposite to each other at the front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at the rear part of the intelligent driving device. In an example, M=3. Three camera groups are a group 1, a group 2, and a group 3. The intelligent driving device includes six cameras: a camera 1, a camera 2, a camera 3, a camera 4, a camera 5, and a camera 6. Each camera group includes two cameras. For specific related descriptions, refer to FIG. 2. Optionally, the M camera groups may further include a forward group. The forward group includes a seventh camera, and the seventh camera faces the traveling direction of the intelligent driving device. In an example, M=4. Four camera groups are a group 1, a group 2, a group 3, and a group 4. The intelligent driving device 100 includes six cameras: a camera 1, a camera 2, a camera 3, a camera 4, a camera 5, a camera 6, and a camera 7. Each camera group includes at least one camera. For details, refer to FIG. 3.

The M camera groups include a first camera group and a second camera group. A trigger delay of the first camera group is a first delay, and a trigger delay of the second camera group is a second delay. The sequentially triggering exposure of cameras in M camera groups based on trigger delays of the M camera groups to obtain M groups of image data includes: starting a first timer to set an initial moment; when an interval between an indicated moment of the first timer and the initial moment is the first delay, triggering exposure of a camera in the first camera group to obtain image data corresponding to the first camera group; and when an interval between an indicated moment of the first timer and the initial moment is the second delay, triggering exposure of a camera in the second camera group to obtain image data corresponding to the second camera group.

The first delay may be 0, or may be another value. When the first delay is 0, it may be understood that exposure of the camera in the first camera group is triggered when the first timer is started, to obtain the image data corresponding to the first camera group. Optionally, the first laser beam group and the second laser beam group may perform detection respectively in the first scanning direction and the second scanning direction at the initial moment. Certainly, alternatively, the first laser beam group and the second laser beam group may perform detection respectively in the first scanning direction and the second scanning direction before or after the initial moment. This is not limited in embodiments of this application. Optionally, the second delay may be greater than the first delay.

The image data corresponding to the first camera group may be image data captured by all the cameras in the first camera group. For example, if the first camera group includes a camera 1 and a camera 2, the image data corresponding to the first camera group may be image data obtained by the camera 1 through exposure and image data obtained by the camera 2 through exposure. The same applies to the image data corresponding to the second camera group.

There may be one or more first timers. When there are a plurality of first timers, a quantity of first timers is the same as a quantity of cameras in a camera group. For example, if there are two cameras in the first camera group: a camera 1 and a camera 2, there are two first timers: a timer 1 and a timer 2. The timer 1 and the timer 2 may be synchronous. For example, the first delay is 0. The timer 1 and the timer 2 are started to trigger exposure of the camera 1 and the camera 2 in the first camera group to obtain the image data corresponding to the first camera group. To be specific, the timer 1 triggers exposure of the camera 1 to obtain the image data corresponding to the camera 1, and the timer 2 triggers exposure of the camera 2 to obtain the image data corresponding to the camera 2.

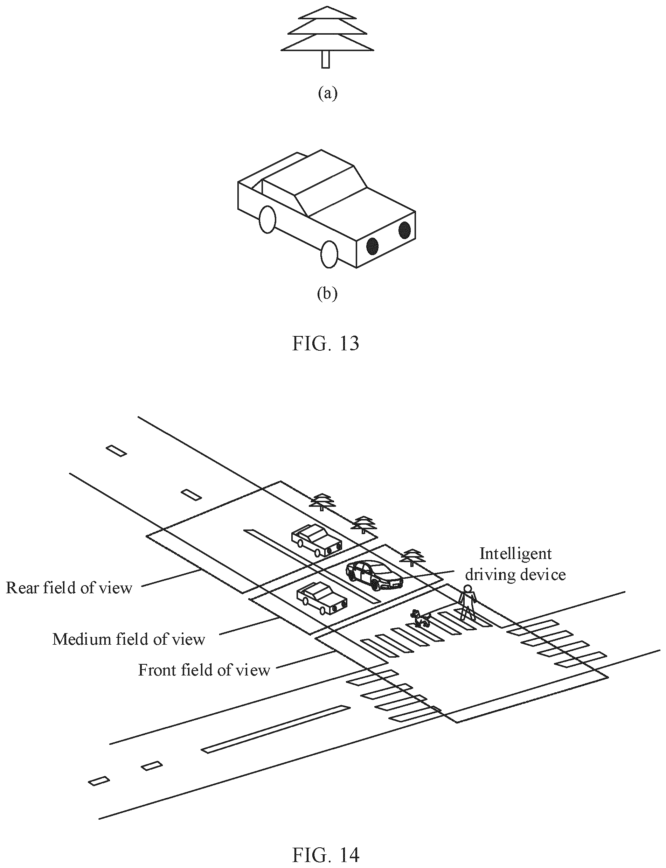

In an example, the first delay is 0 milliseconds (ms), and the second delay is 30 ms. The first camera group includes a camera 1 and a camera 2, and the second camera group includes a camera 3 and a camera 4. The first timer is started to set the initial moment to t0. When the indicated moment of the first timer is t0 and the first delay between the indicated moment t0 and the initial moment t0 is 0 ms, exposure of the camera 1 and the camera 2 is triggered to obtain image data captured by the camera 1 and image data captured by the camera 2. For the environment in FIG. 10, as shown in FIG. 12, (a) in FIG. 12 is the image data captured by the camera 1, namely, image data in a front field of view in the traveling direction of the intelligent driving device, and (b) in FIG. 12 is the image data captured by the camera 2, namely, image data in the front field of view in the traveling direction of the intelligent driving device. When the indicated moment of the first timer is t1, and the second delay between the indicated moment t1 and the initial moment t0 is 30 ms, exposure of the camera 3 and the camera 4 is triggered to obtain image data captured by the camera 3 and image data captured by the camera 4. For the environment in FIG. 10, as shown in FIG. 13, (a) in FIG. 13 is the image data captured by the camera 3, namely, image data in a middle field of view in the traveling direction of the intelligent driving device, and (b) in FIG. 13 is the image data captured by the camera 4, namely, image data in the middle field of view in the traveling direction of the intelligent driving device.

S703: Fuse image data corresponding to each camera group in the M camera groups with the point cloud data to obtain data that corresponds to the camera group and that is used for perception processing.

Fusing the image data corresponding to each camera group in the M camera groups with the point cloud data to obtain the data that corresponds to the camera group and that is used for perception processing may be as follows: using the image data corresponding to each camera group in the M camera groups and the point cloud data as input data, and inputting the input data to a fusion perception algorithm, for example, a multi-modal fusion algorithm, to obtain the data that corresponds to the camera group and that is used for perception processing.

For example, (c) in FIG. 11 is a diagram of the point cloud data obtained by splicing the first data and the second data based on the environment in FIG. 10. As shown in FIG. 12, (a) in FIG. 12 is the image data captured by the camera 1 in the first camera group, and (b) in FIG. 12 is the image data captured by the camera 2 in the first camera group. Correspondingly, the point cloud data in (c) in FIG. 11 may be fused with the image data captured by the camera 1 in the first camera group in (a) in FIG. 12 and the image data captured by the camera 2 in the first camera group in (b) in FIG. 12, to obtain the data that corresponds to the camera group and that is used for perception processing, that is, obtain a fusion result of the point cloud data and the image data in the front field of view in the traveling direction of the intelligent driving device. Further, FIG. 14 is a diagram of a front field of view, a middle field of view, and a rear field of view of the intelligent driving device in the environment shown in FIG. 10. Correspondingly, a process is similar to a process of obtaining the fusion result of the point cloud data and the image data in the front field of view, and a fusion result of point cloud data and image data in the middle field of view in the traveling direction of the intelligent driving device and a fusion result of point cloud data and image data in the rear field of view in the traveling direction of the intelligent driving device may be obtained.

In a possible implementation, the image data corresponding to each of the M camera groups may be fused. In other words, it may be understood that image data corresponding to at least two of the M camera groups may be used as input data, and the input data is input to a camera perception algorithm, for example, an image 2D target detection algorithm, to obtain a corresponding result. For example, M=3, and three camera groups are a camera group 1, a camera group 2, and a camera group 3. Each camera group includes two cameras. For example, the camera group 1 includes a camera 1 and a camera 2, the camera group 2 includes a camera 3 and a camera 4, and the camera group 3 includes a camera 5 and a camera 6. For example, image data of the camera 1 in the camera group 1, image data of the camera 2 in the camera group 1, image data of the camera 3 in the camera group 2, and image data of the camera 4 in the camera group 2 may be input to the camera perception algorithm, to obtain a corresponding result. For example, the result may be used to detect a target obstacle.

In the foregoing method, the traveling direction of the intelligent driving device is used as a reference. In this application, the point cloud data may be fused with the image data of the camera group corresponding to the front field of view of the intelligent driving device, to improve a fusion effect of the point cloud data and the image data in the front field of view. Similarly, a fusion effect of the point cloud data and the image data in the middle field of view and a fusion effect of the point cloud data and the image data in the rear field of view may also be improved. In this way, the ambient environment of the vehicle is more accurately identified. This is more conducive to planning and implementation of an autonomous driving task.

The foregoing describes in detail methods in embodiments of this application. The following provides apparatuses in embodiments of this application.

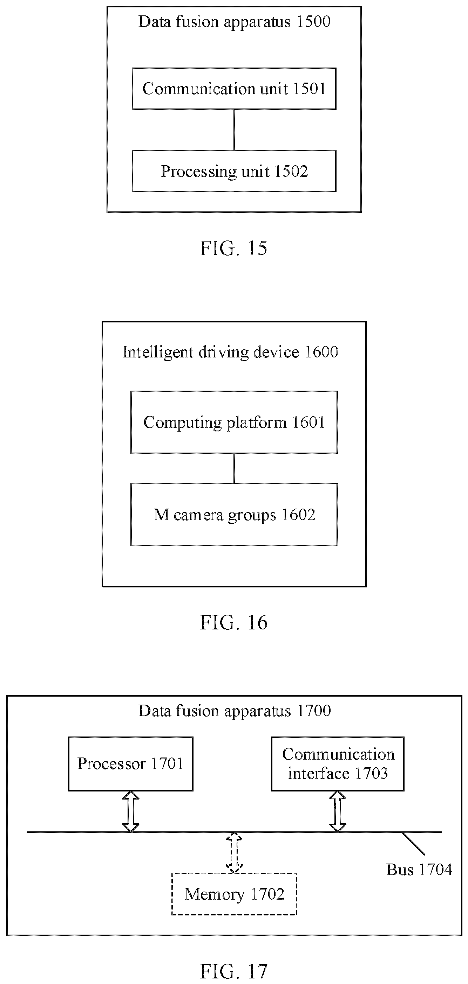

FIG. 15 is a diagram of a structure of a data fusion apparatus 1500 according to an embodiment of this application. The data fusion apparatus 1500 is a vehicle-mounted computing platform or a cloud server. The data fusion apparatus 1500 includes a communication unit 1501 and a processing unit 1502. The apparatus 1500 may be implemented by using hardware, software, or a combination of software and hardware.

The processing unit 1502 is configured to obtain point cloud data. The point cloud data is obtained through detection in a first scanning direction and a second scanning direction respectively based on a first laser beam group and a second laser beam group, and the first scanning direction is different from the second scanning direction.

The processing unit 1502 is configured to sequentially trigger exposure of cameras in M camera groups based on trigger delays of the M camera groups to obtain M groups of image data. Cameras in a same camera group are exposed simultaneously. The trigger delay is related to a scan cycle of the first laser beam group and the second laser beam group, and M is a positive integer greater than or equal to 1.

The processing unit 1502 is configured to fuse image data corresponding to each camera group in the M camera groups with the point cloud data to obtain data that corresponds to the camera group and that is used for perception processing.

In a possible implementation, the processing unit 1502 is configured to obtain first data. The first data is obtained through detection by the first laser beam group in the first scanning direction. The processing unit 1502 is configured to obtain second data. The second data is obtained through detection by the second laser beam group in the second scanning direction. The processing unit 1502 is configured to splice the first data and the second data to obtain the point cloud data.

In another possible implementation, the first laser beam group and the second laser beam group are from a same laser emitting apparatus.

In still another possible implementation, the first laser beam group is from a first laser emitting apparatus, and the second laser beam group is from a second laser emitting apparatus.

In still another possible implementation, the processing unit 1502 is configured to: determine a location of each camera group in the M camera groups, and determine a trigger delay of each camera group based on the scan cycle and the location of each camera group in the M camera groups.

In still another possible implementation, the M camera groups include a first camera group and a second camera group, a trigger delay of the first camera group is a first delay, and a trigger delay of the second camera group is a second delay. The processing unit 1502 is configured to start a first timer to set an initial moment. The processing unit 1502 is configured to: when an interval between an indicated moment of the first timer and the initial moment is the first delay, trigger exposure of a camera in the first camera group to obtain image data corresponding to the first camera group. The processing unit 1502 is configured to: when an interval between an indicated moment of the first timer and the initial moment is the second delay, trigger exposure of a camera in the second camera group to obtain image data corresponding to the second camera group.

In still another possible implementation, the M camera groups include a front-part group, a side-part group, and a rear-part group. The front-part group includes a first camera and a second camera, and the first camera and the second camera are disposed opposite to each other at the front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at the rear part of the intelligent driving device.

In still another possible implementation, the M camera groups further include a forward group, the forward group includes a seventh camera, and the seventh camera faces the traveling direction of the intelligent driving device.

For implementations and beneficial effects of the modules, refer to corresponding descriptions in the method embodiment shown in FIG. 7.

FIG. 16 is a diagram of an intelligent driving device 1600 according to an embodiment of this application. The intelligent driving device 1600 includes a computing platform 1601 and M camera groups 1602. The computing platform 1601 is configured to:

obtain point cloud data, where the point cloud data is obtained through detection in a first scanning direction and a second scanning direction respectively based on a first laser beam group and a second laser beam group, and the first scanning direction is different from the second scanning direction;

sequentially trigger exposure of cameras in the M camera groups based on trigger delays of the M camera groups to obtain M groups of image data, where cameras in a same camera group are exposed simultaneously, the trigger delay is related to a scan cycle of the first laser beam group and the second laser beam group, and M is a positive integer greater than or equal to 1; and

fuse image data corresponding to each camera group in the M camera groups with the point cloud data to obtain data that corresponds to the camera group and that is used for perception processing.

In a possible implementation, when obtaining the point cloud data, the computing platform 1601 is configured to: obtain first data, where the first data is obtained through detection by the first laser beam group in the first scanning direction; obtain second data, where the second data is obtained through detection by the second laser beam group in the second scanning direction; and splice the first data and the second data to obtain the point cloud data.

In another possible implementation, the first laser beam group and the second laser beam group are from a same laser emitting apparatus.

In still another possible implementation, the first laser beam group is from a first laser emitting apparatus, and the second laser beam group is from a second laser emitting apparatus.

In still another possible implementation, the first laser emitting apparatus and the second laser emitting apparatus are lidar apparatuses.

In still another possible implementation, the computing platform 1601 is configured to: determine a location of each camera group in the M camera groups, and determine a trigger delay of each camera group based on the scan cycle and the location of each camera group in the M camera groups.

In still another possible implementation, the M camera groups include a first camera group and a second camera group. A trigger delay of the first camera group is a first delay. A trigger delay of the second camera group is a second delay. The computing platform 1601 is further configured to: start a first timer to set an initial moment; when an interval between an indicated moment of the first timer and the initial moment is the first delay, trigger exposure of a camera in the first camera group to obtain image data corresponding to the first camera group; and when an interval between the indicated moment of the first timer and the initial moment is the second delay, trigger exposure of a camera in the second camera group to obtain image data corresponding to the second camera group.

In still another possible implementation, the M camera groups include a front-part group, a side-part group, and a rear-part group. The front-part group includes a first camera and a second camera, and the first camera and the second camera are disposed opposite to each other at the front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at the rear part of the intelligent driving device.

In still another possible implementation, the M camera groups further include a forward group, the forward group includes a seventh camera, and the seventh camera faces the traveling direction of the intelligent driving device.

For implementations and beneficial effects of the modules, refer to corresponding descriptions in the method embodiment shown in FIG. 7.

FIG. 17 is a diagram of a data fusion apparatus 1700 according to an embodiment of this application. The data fusion apparatus 1700 may be a vehicle-mounted computing platform or a cloud server. The data fusion apparatus 1700 includes at least one processor 1701 and a communication interface 1703, and optionally, further includes a memory 1702. The processor 1701, the memory 1702, and the communication interface 1703 are connected to each other through a bus 1704. Optionally, the data fusion apparatus 1700 may be a vehicle-mounted computing platform or a cloud server.

The memory 1702 includes but is not limited to a random-access memory (random-access memory, RAM), a read-only memory (read-only memory, ROM), an erasable programmable read-only memory (erasable programmable read-only memory, EPROM), or a compact disc read-only memory (compact disc read-only memory, CD-ROM). The memory 1702 is configured to store a related computer program and data. The communication interface 1703 is configured to receive and send data.

The processor 1701 may be one or more central processing units (central processing units, CPUs). When the processor 1701 is one CPU, the CPU may be a single-core CPU or a multi-core CPU.

The processor 1701 in the data fusion apparatus 1700 is configured to read computer program code stored in the memory 1702, to perform the following operations:

obtain point cloud data, where the point cloud data is obtained through detection in a first scanning direction and a second scanning direction respectively based on a first laser beam group and a second laser beam group, and the first scanning direction is different from the second scanning direction;

sequentially trigger exposure of cameras in M camera groups based on trigger delays of the M camera groups to obtain M groups of image data, where cameras in a same camera group are exposed simultaneously, the trigger delay is related to a scan cycle of the first laser beam group and the second laser beam group, and M is a positive integer greater than or equal to 1; and

fuse image data corresponding to each camera group in the M camera groups with the point cloud data to obtain data that corresponds to the camera group and that is used for perception processing.

In a possible implementation, the processor 1701 is configured to obtain first data. The first data is obtained through detection by the first laser beam group in the first scanning direction. The processor 1701 is configured to obtain second data. The second data is obtained through detection by the second laser beam group in the second scanning direction. The processor 1701 is configured to splice the first data and the second data to obtain the point cloud data.

In another possible implementation, the first laser beam group and the second laser beam group are from a same laser emitting apparatus.

In still another possible implementation, the first laser beam group is from a first laser emitting apparatus, and the second laser beam group is from a second laser emitting apparatus.

In still another possible implementation, the processor 1701 is configured to: determine a location of each camera group in the M camera groups, and determine a trigger delay of each camera group based on the scan cycle and the location of each camera group in the M camera groups.

In still another possible implementation, the M camera groups include a first camera group and a second camera group, a trigger delay of the first camera group is a first delay, and a trigger delay of the second camera group is a second delay. The processor 1701 is configured to start a first timer to set an initial moment. The processor 1701 is configured to: when an interval between an indicated moment of the first timer and the initial moment is the first delay, trigger exposure of a camera in the first camera group to obtain image data corresponding to the first camera group. The processor 1701 is configured to: when an interval between an indicated moment of the first timer and the initial moment is the second delay, trigger exposure of a camera in the second camera group to obtain image data corresponding to the second camera group.

In still another possible implementation, the M camera groups include a front-part group, a side-part group, and a rear-part group. The front-part group includes a first camera and a second camera, and the first camera and the second camera are disposed opposite to each other at the front part of the intelligent driving device. The side-part group includes a third camera and a fourth camera, and the third camera and the fourth camera are disposed opposite to each other on two sides of the intelligent driving device. The rear-part group includes a fifth camera and a sixth camera, and the fifth camera and the sixth camera are disposed opposite to each other at the rear part of the intelligent driving device.

In still another possible implementation, the M camera groups further include a forward group, the forward group includes a seventh camera, and the seventh camera faces the traveling direction of the intelligent driving device.

For implementations and beneficial effects of the operations, refer to corresponding descriptions in the method embodiment shown in FIG. 7.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

All or some of the foregoing embodiments may be implemented by using software, hardware, firmware, or any combination thereof. When software is used to implement the embodiments, all or some of the embodiments may be implemented in a form of computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

**Claims**

1. A data fusion method, applied to an intelligent driving scenario, wherein the method comprises:

   obtaining point cloud data, wherein the point cloud data is obtained through detection in a first scanning direction and a second scanning direction respectively based on a first laser beam group and a second laser beam group, and the first scanning direction is different from the second scanning direction;
   sequentially triggering exposure of cameras in M camera groups based on trigger delays of the M camera groups to obtain M groups of image data, wherein cameras in a same camera group are exposed simultaneously, the trigger delay is related to a scan cycle of the first laser beam group and the second laser beam group, and M is a positive integer greater than or equal to 1; and
   fusing image data corresponding to each camera group in the M camera groups with the point cloud data to obtain data that corresponds to the camera group and that is used for perception processing.

2. The method according to claim 1, wherein the obtaining point cloud data comprises:

   obtaining first data, wherein the first data is obtained through detection by the first laser beam group in the first scanning direction;
   obtaining second data, wherein the second data is obtained through detection by the second laser beam group in the second scanning direction; and
   splicing the first data and the second data to obtain the point cloud data.

3. The method according to claim 1 or 2, wherein the first laser beam group and the second laser beam group are from a same laser emitting apparatus.

4. The method according to claim 1 or 2, wherein the first laser beam group is from a first laser emitting apparatus, and the second laser beam group is from a second laser emitting apparatus.

5. The method according to any one of claims 1 to 4, wherein the method further comprises:

   determining a location of each camera group in the M camera groups; and
   determining a trigger delay of each camera group in the camera groups based on the scan cycle and the location of each camera group in the M camera groups.

6. The method according to any one of claims 1 to 5, wherein the M camera groups comprise a first camera group and a second camera group, a trigger delay of the first camera group is a first delay, and a trigger delay of the second camera group is a second delay; and
   the sequentially triggering exposure of cameras in M camera groups based on trigger delays of the M camera groups to obtain M groups of image data comprises:

   starting a first timer to set an initial moment;
   when an interval between an indicated moment of the first timer and the initial moment is the first delay, triggering exposure of a camera in the first camera group to obtain image data corresponding to the first camera group; and
   when an interval between an indicated moment of the first timer and the initial moment is the second delay, triggering exposure of a camera in the second camera group to obtain image data corresponding to the second camera group.

7. The method according to any one of claims 1 to 6, wherein the M camera groups comprise a front-part group, a side-part group, and a rear-part group;

   the front-part group comprises a first camera and a second camera, and the first camera and the second camera are disposed opposite to each other at a front part of an intelligent driving device;
   the side-part group comprises a third camera and a fourth camera, and the third camera and the fourth camera are disposed opposite to each other on two sides of the intelligent driving device; and
   the rear-part group comprises a fifth camera and a sixth camera, and the fifth camera and the sixth camera are disposed opposite to each other at a rear part of the intelligent driving device.

8. The method according to claim 7, wherein the M camera groups further comprise a forward group, the forward group comprises a seventh camera, and the seventh camera faces a traveling direction of the intelligent driving device.

9. An intelligent driving device, comprising a computing platform and M camera groups, wherein the computing platform is configured to:

obtain point cloud data, wherein the point cloud data is obtained through detection in a first scanning direction and a second scanning direction respectively based on a first laser beam group and a second laser beam group, and the first scanning direction is different from the second scanning direction;

sequentially trigger exposure of cameras in the M camera groups based on trigger delays of the M camera groups to obtain M groups of image data, wherein cameras in a same camera group are exposed simultaneously, the trigger delay is related to a scan cycle of the first laser beam group and the second laser beam group, and M is a positive integer greater than or equal to 1; and

fuse image data corresponding to each camera group in the M camera groups with the point cloud data to obtain data that corresponds to the camera group and that is used for perception processing.

10. The intelligent driving device according to claim 9, wherein when obtaining the point cloud data, the computing platform is configured to:

obtain first data, wherein the first data is obtained through detection by the first laser beam group in the first scanning direction;

obtain second data, wherein the second data is obtained through detection by the second laser beam group in the second scanning direction; and

splice the first data and the second data to obtain the point cloud data.

11. The intelligent driving device according to claim 9 or 10, wherein the first laser beam group and the second laser beam group are from a same laser emitting apparatus.

12. The intelligent driving device according to claim 9 or 10, wherein the intelligent driving device further comprises a first laser emitting apparatus and a second laser emitting apparatus; and

the first laser beam group is from the first laser emitting apparatus, and the second laser beam group is from the second laser emitting apparatus.

13. The intelligent driving device according to claim 12, wherein the first laser emitting apparatus and the second laser emitting apparatus are lidar apparatuses.

14. The intelligent driving device according to any one of claims 9 to 13, wherein the computing platform is further configured to:

determine a location of each camera group in the M camera groups; and

determine a trigger delay of each camera group in the camera groups based on the scan cycle and the location of each camera group in the M camera groups.

15. The intelligent driving device according to any one of claims 9 to 14, wherein the M camera groups comprise a first camera group and a second camera group, a trigger delay of the first camera group is a first delay, a trigger delay of the second camera group is a second delay, and the computing platform is further configured to:

start a first timer to set an initial moment;

when an interval between an indicated moment of the first timer and the initial moment is the first delay, trigger exposure of a camera in the first camera group to obtain image data corresponding to the first camera group; and

when an interval between an indicated moment of the first timer and the initial moment is the second delay, trigger exposure of a camera in the second camera group to obtain image data corresponding to the second camera group.

16. The intelligent driving device according to any one of claims 9 to 15, wherein the M camera groups comprise a front-part group, a side-part group, and a rear-part group;

the front-part group comprises a first camera and a second camera, and the first camera and the second camera are disposed opposite to each other at a front part of the intelligent driving device;

the side-part group comprises a third camera and a fourth camera, and the third camera and the fourth camera are disposed opposite to each other on two sides of the intelligent driving device; and

the rear-part group comprises a fifth camera and a sixth camera, and the fifth camera and the sixth camera are disposed opposite to each other at a rear part of the intelligent driving device.

17. The intelligent driving device according to claim 16, wherein the M camera groups further comprise a forward group, the forward group comprises a seventh camera, and the seventh camera faces a traveling direction of the intelligent driving device.

18. A data fusion apparatus, comprising a processor and a memory, wherein the memory and the processor are interconnected through a line, the processor is configured to obtain a computer program stored in the memory, and when the computer program is executed by the processor, the data fusion apparatus is configured to implement the method according to any one of claims 1 to 8.

19. The data fusion apparatus according to claim 18, wherein the data fusion apparatus is a vehicle-mounted computing platform or a cloud server.

Intelligent driving device 100

| Laser emitting apparatus 103 | Computing platform 101 | M camera groups 102 |

FIG. 1

Camera 1          Camera 2

Camera 1 and camera 2
belong to a group 1
Camera 3 and camera 4
belong to a group 2
Camera 5 and camera 6
belong to a group 3

Camera 3 ———          ——— Camera 4

Camera 5          Camera 6

FIG. 2

Camera 7

Camera 1　　　　Camera 2

Camera 1 and camera 2
belong to a group 1

Camera 3 and camera 4
belong to a group 2

Camera 5 and camera 6
belong to a group 3

Camera 7 belongs to a group 4

Camera 3

Camera 4

Camera 5

Camera 6

FIG. 3

Intelligent driving device 100

**Travel system 202**

Engine 218

Energy source 219

Transmission apparatus 220

Wheel 221

**Sensor system 204**

Positioning system 222

Inertial measurement unit 224

Radar 226

Laser rangefinder 228

Camera 230

**Control system 206**

Steering system 232

Throttle 234

Brake unit 236

Sensor fusion algorithm 238

Computer vision system 240

Route control system 242

Obstacle avoidance system 244

**Peripheral device 208**

Wireless communication system 246

Vehicle-mounted computer 248

Microphone 250

Speaker 252

**Computer system 212**

Processor 213

Instructions 215

Memory 214

Power supply 210

User interface 216

EP 4 580 247 A1

FIG. 4

FIG. 5

212

533 Hard disk drive
531 Hard disk drive interface

213 Processor

214 Memory

System bus 505

507 Display adapter

501 Bus bridge

513 I/O bus

515 I/O interface

525 External USB port

529 Network interface

527 Network

549 Deploying server

553 Sensor
555 Camera
523 Transceiver
521 Media tray
517 Input device
509 Display

System memory 535
OS 537
Shell 539
Kernel 541
Application 543
Autonomous driving-related program 547

T6      T1

Laser beam
group

T5      Lidar apparatus      T2

T4      T3

FIG. 6

S701: Obtain point cloud data

S702: Sequentially trigger exposure of cameras in M camera groups based on trigger delays of the M camera groups to obtain M groups of image data

S703: Fuse image data corresponding to each camera group in the M camera groups with the point cloud data to obtain data that corresponds to the camera group and that is used for perception processing

FIG. 7

First laser beam group　　　Second laser beam group

Laser emitting apparatus

FIG. 8a

Central axis

First laser beam group

Second laser beam group

Laser emitting apparatus

FIG. 8b

First laser beam group　　　Second laser beam group

First laser emitting apparatus and
second laser emitting apparatus

FIG. 9a

Central axis

First laser beam group

First laser emitting apparatus

Central axis

Second laser beam group

Second laser emitting apparatus

FIG. 9b

Intelligent driving device

FIG. 10

(a)

(b)

(c)

FIG. 11

(a)

(b)

FIG. 12

(a)

(b)

FIG. 13

Rear field of view

Medium field of view

Front field of view

Intelligent driving device

FIG. 14

Data fusion apparatus 1500

Communication unit 1501

Processing unit 1502

FIG. 15

Intelligent driving device 1600

Computing platform 1601

M camera groups 1602

FIG. 16

Data fusion apparatus 1700

Processor 1701

Communication interface 1703

Bus 1704

Memory 1702

FIG. 17

## INTERNATIONAL SEARCH REPORT

| International application No. |
| --- |
| **PCT/CN2022/119125** |

| A. | CLASSIFICATION OF SUBJECT MATTER |
| --- | --- |

H04W28/06(2009.01)i

According to International Patent Classification (IPC) or to both national classification and IPC

| B. | FIELDS SEARCHED |
| --- | --- |

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; WPABS; DWPI; EPTXT; USTXT: 激光, 雷达, 点云, 相机, 摄像机, 图片, 图像, 融合, 同步, 扫描方向, lidar, point cloud, camera, image, picture, fusion, synchronism, scanning direction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 113138393 A (ALIBABA GROUP HOLDING LIMITED) 2021-07-20 (2021-07-20) description, paragraphs [0059]-[0217], and figure 8 | 1-19 |
| Y | CN 109858512 A (BEIJING BAIDU NETCOM SCIENCE AND TECHNOLOGY CO., LTD.) 2019-06-07 (2019-06-07) description, paragraphs [0024]-[0126], and figure 4 | 1-19 |
| A | CN 108957478 A (HESAI PHOTONICS TECHNOLOGY CO., LTD.) 2018-12-07 (2018-12-07) description, paragraphs [0002]-[0096] | 1-19 |
| A | CN 112291024 A (BEIJING HORIZON ROBOTICS TECHNOLOGY RESEARCH AND DEVELOPMENT CO., LTD.) 2021-01-29 (2021-01-29) description, paragraphs [0002]-[0201] | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 April 2023** | **29 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/119125**

| Patent document cited in search report | | | Publication date (day/month/year) | Patent family member(s) | | | Publication date (day/month/year) |
|---|---|---|---|---|---|---|---|
| CN | 113138393 | A | 20 July 2021 | None | | | |
| CN | 109858512 | A | 07 June 2019 | US | 2020180652 | A1 | 11 June 2020 |
| | | | | US | 11535265 | B2 | 27 December 2022 |
| | | | | CN | 109858512 | B | 03 August 2021 |
| CN | 108957478 | A | 07 December 2018 | CN | 108957478 | B | 26 March 2021 |
| CN | 112291024 | A | 29 January 2021 | None | | | |

Form PCT/ISA/210 (patent family annex) (July 2022)